Europäisches Patentamt

European Patent Office

Office européen des brevets

(19)

(11) Publication number: **0 189 567 B1**

# EUROPEAN PATENT SPECIFICATION

(45) Date of publication of patent specification: **27.05.92** (51) Int. Cl.⁵: **G09G 1/28**

(21) Application number: **85115695.0**

(22) Date of filing: **10.12.85**

(54) **Color display system.**

(30) Priority: **28.12.84 JP 275066/84**

(43) Date of publication of application:
**06.08.86 Bulletin 86/32**

(45) Publication of the grant of the patent:
**27.05.92 Bulletin 92/22**

(84) Designated Contracting States:
**DE FR GB IT**

(56) References cited:
**US-A- 4 368 461**

**IBM TECHNICAL DISCLOSURE BULLETIN, vol. 25, no. 3A, August 1982, pages 1331-1332, New York, US; R.C. KURTZ: "Dual-port color monitor adapter"**

(73) Proprietor: **International Business Machines Corporation**
**Old Orchard Road**
**Armonk, N.Y. 10504(US)**

(72) Inventor: **Honda, Kazutoshi**
**2400-27 Imajuku-cho asahi-ku**
**Yokohama-shi Kanagawa-ken(JP)**
Inventor: **Suzuki, Hirohisa**
**430-1 Endoh**
**Fujisawa-shi Kanagawa-ken(JP)**

(74) Representative: **Killgren, Neil Arthur**
**IBM United Kingdom Limited Intellectual Property Department Hursley Park**
**Winchester Hampshire SO21 2JN(GB)**

**Description**

This invention relates to a color display system in accordance with the preamble of claim 1, and to a method to operate such a system; more particularly it concerns a color display system that can simultaneously display independent color graphic patterns and color character patterns on a screen.

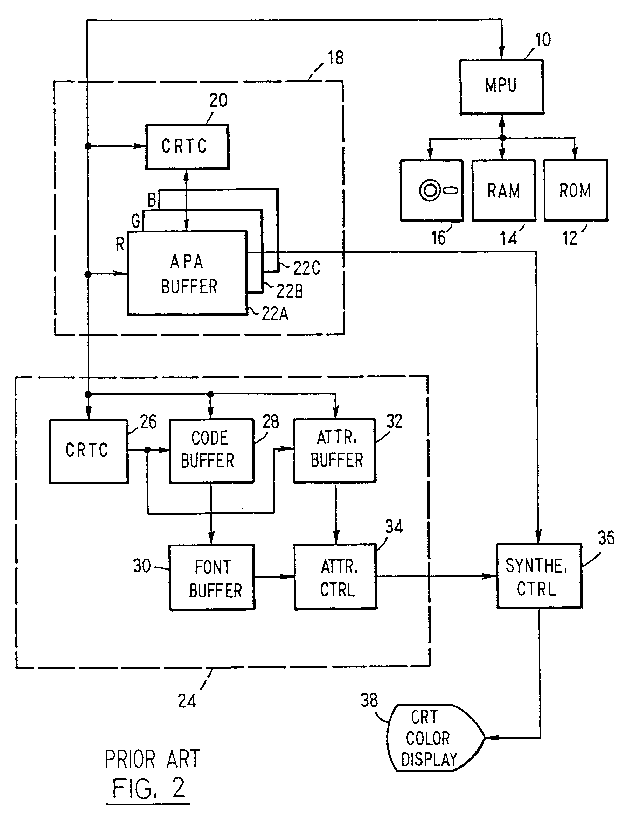

Recently, there has been a rapid development of small information processing equipments such as word processors or a personal computers which include cathode ray tube (CRT) color display systems. Such an information processing equipment has required two CRT driving assemblies 18 and 24 as shown in Figure 2 to simultaneously display independent color graphic patterns and color character patterns.

In Figure 2, 10 is an ordinary microprocessor (MPU), 20 and 26 ordinary CRT controllers (CRTC), 22A - 22C all point addressable (APA) buffers each of which has a plurality of storage locations, each of the storage locations storing color specifying bits of the corresponding pixel, for example, three bits of R (red), G (green) and B (blue) corresponding to the three primary colors, 28 a code buffer for storing codes of characters to be displayed, 30 a font buffer for storing patterns of possible characters, 32 a attribute buffer for storing attribute codes of characters to be displayed, 34 a attribute controller for controlling the manner of display for characters read from the font buffer 30, 36 a synthesizing controller, 38 a CRT color display device of raster type. The MPU 10 is connected to a read only memory (ROM) 12 for storing microcodes or the like, a random access memory (RAM) 14 for storing programs and data, and an I/O device such as magnetic diskette file 16.

In such a configuration, display and attribute information from the MPU 10 are previously stored in the APA buffers 22A - 22C, the code buffer 28 and the attribute buffer 32. Then, graphic patterns are read from the APA buffers 22A - 22C under the control of CRTC 20, while the character patterns are read from the font buffer 30 under the control of CRTC 26. These patterns are supplied to the synthesizing controller 36 that may contain an ordinary parallel/ serial converter circuit (not shown), synthesized therein and then displayed on the CRT color display device 38.

However, in such a conventional information processing equipment, it is required to provide two series of driving assemblies, that is, the graphic driving assembly 18 and the character driving assembly 24 in order to simultaneously display the color graphic patterns and the color character patterns onto a CRT display device. Therefore, there is a drawback in that the cost of the entire information processing equipment becomes much higher than desired. This makes it difficult to apply the above-mentioned conventional system to a small information processing equipments such as personal computers.

Accordingly, this invention intends to provide a color display system of the aforementioned kind and a method to operate it that eliminate such drawback in the prior art and make it possible to simultaneously display the color graphic patterns and the color character patterns with a simple configuration.

These objects are achieved by the invention described in the appended claims; embodiments of the invention are characterized in the dependent claims.

The color display system includes one or more all point addressable (APA) buffers for storing color information of each pixel constituting a graphic pattern as a plurality of color specifying bits; additionally it comprises a pattern memory for storing possible character patterns, a pointer memory for storing address information of the pattern memory, in which character patterns to be displayed are placed, in correspondence with character display positions on a screen, and a color information memory for storing color information of the character patterns to be displayed in correspondence with the character display positions on the screen, whereby a character pattern read from the pattern memory according to the content of the pointer memory is written into a specific storage location of APA buffer specified by the content of the color information memory, so that a color graphic pattern and a color character pattern can be simultaneously displayed on the screen with a simple configuration.

This invention allows to display a color graphic pattern and a color character pattern simultaneously with a simple configuration, it can be easily applied to a small information processing equipment such as a personal computer, and is very effective in practical use.

An embodiment of the invention is now described in detail with reference to the accompanying drawings, where:

Figure 1 is a block diagram showing a CRT color display system of the invention;

Figure 2 is a block diagram showing a CRT color display system of the prior art;

Figures 3A - 3C are flowcharts illustrating exemplary operations in the CRT color display system of the invention;

Figures 4A - 4B are views showing display on the screen and content of each memory in major steps in Figures 3A - 3C.

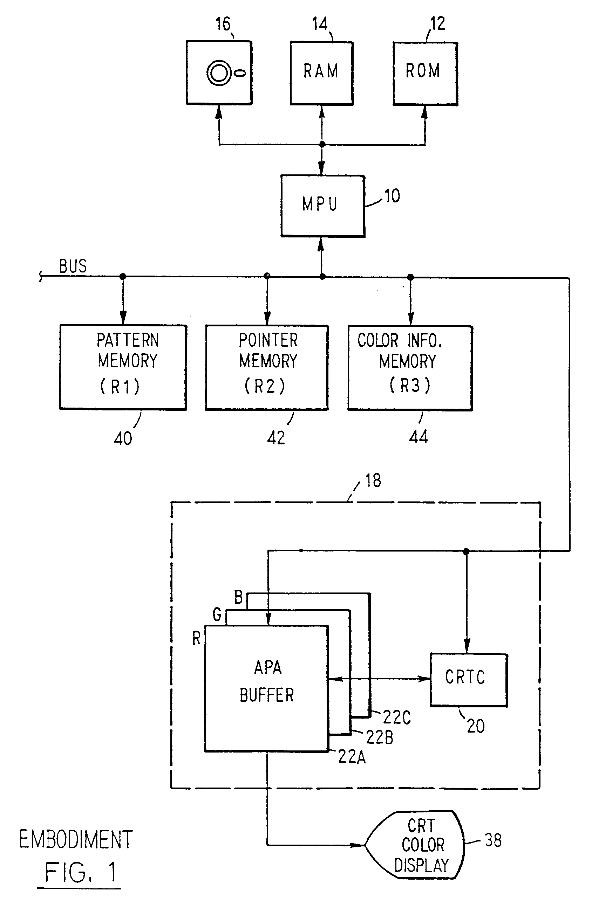

A. Basic configuration (Figure 1)

Figure 1 shows an embodiment of the color display system according to the invention, wherein 40 is a pattern memory (R1), 42 a pointer memory (R2), and 44 a color information memory (R3). Other numerals correspond to those in Figure 2.

The R1 memory 40 is preferably a RAM that can store patterns of all characters displayable on the screen. As is well known in the art, each character pattern consists of m x n bits (m and n are integers larger than one), which correspond to pixels of m x n constituting each character display location on the screen. Alternatively, the R1 memory 40 may be constituted by a RAM of cache type that stores a predetermined number of character patterns read from a magnetic diskette file 16 on a demand base, or a ROM that stores possible character patterns. If the R1 memory 40 is constituted by the RAM, it is used to receive the character patterns read from the magnetic diskette file 16 through the bus of MPU 10, and to transfer given character patterns read therefrom to the APA buffers 22A - 22C through the bus of MPU 10.

The R2 memory 42 is a RAM that has a plurality of storage locations corresponding to character display locations on the screen. Each of these storage locations stores address information of the R1 memory 40 in which a character pattern to be displayed at the corresponding character display location is placed. For example, if a given character pattern placed at address #1 of the R1 memory 40 is to be displayed at character display location #50 on the screen, address information specifying address #1 of R1 memory 40 is stored in storage location #50 of R2 memory 42. The R2 memory 42 is used to receive these address information through the bus of MPU 10, and to address the R1 memory 40 and the APA buffers 22A - 22C with the given address information read therefrom to transfer the character patterns from the R1 memory 40 to the APA buffers 22A - 22C.

The R3 memory 44 is a RAM similar to the R2 memory 42 that has a plurality of storage locations corresponding to the character display locations on the screen. Each of these storage locations stores color information of character patterns to be displayed at the corresponding character display location. For example, if a given character pattern read from the R1 memory 40 is to be displayed at character display location #50 on the screen, color information specifying green is stored in storage location #50 of R3 memory 44. The R3 memory 44 is used to receive these color information through the bus of MPU 10, and to select specific APA buffers 22A - 22C by given color information read therefrom.

Although, in the above description, the memories 40 - 44 are described as physically separate RAMs, it may be possible to constitute them with a single RAM, or to use a predetermined area in the RAM 14 used as a normal main storage instead of these memories. Since the configuration of the graphic driving assembly 18 is known in the art, its detailed description is omitted herein.

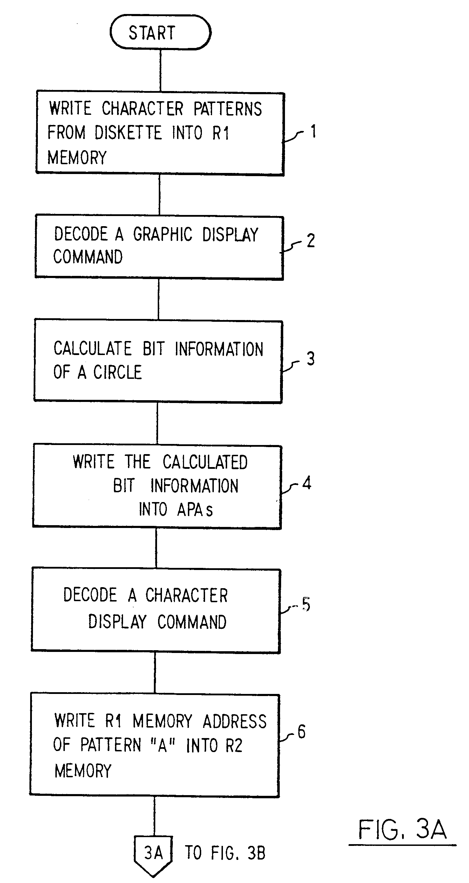

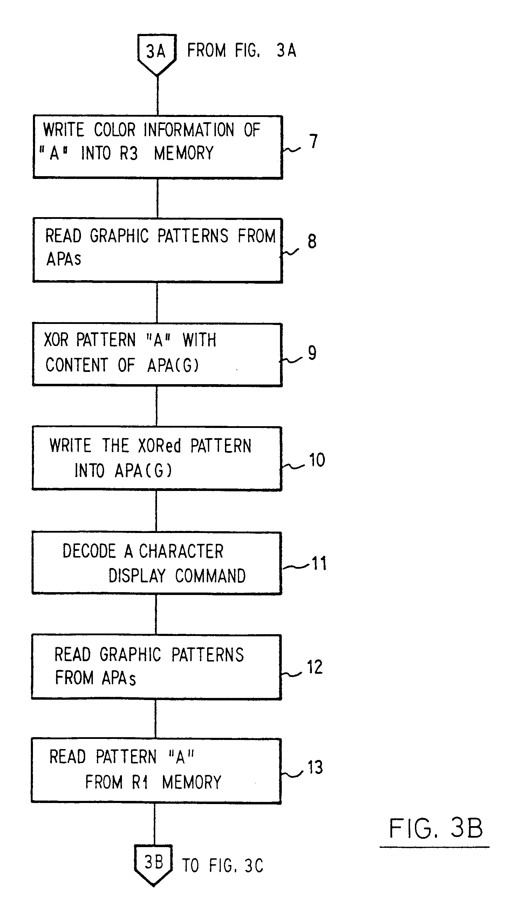

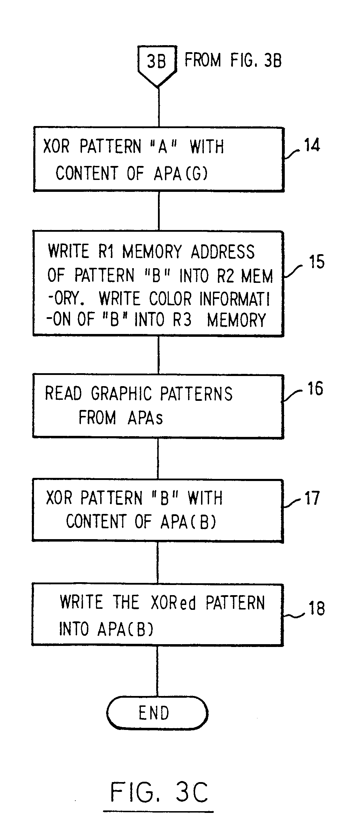

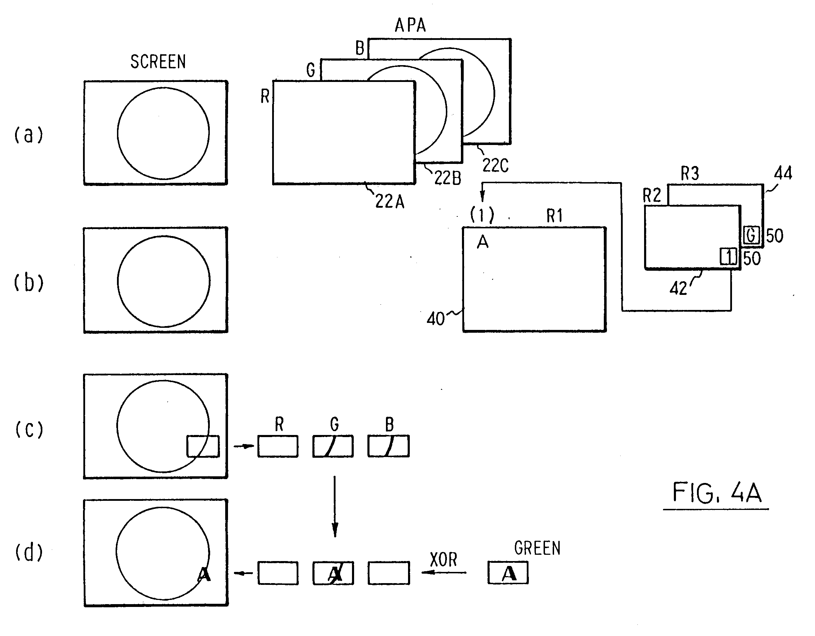

B. Operation (Figures 3A - 3C, and 4A - 4B)

For convenience of description, it is assumed in the following that a circular graphic pattern is displayed in yellow on the screen, then a green character "A" is displayed as a part of the graphic pattern, and finally a blue character "B" is displayed at the same location as the character "A." Figures 3A - 3C show a flowchart in such exemplary operations, while Figure 4A - 4B show display on the screen and the content of each memory at its major steps. As clearly seen from the following description, these operations are mainly performed by the MPU 10 under the control of microcodes stored in the ROM 12 (or RAM 14).

In the embodiment of Figure 1, the steps of Figures 3A - 3C according to the above exemplary operations are executed as follows:

Step 1:

According to the initializing microcode in the ROM 12, the MPU 10 reads a program from the magnetic diskette file 16, writes it into the RAM 14, reads a series of character patterns and writes them into the R1 memory 40. At the same time, the correlation between each character pattern written into the R1 memory 40 and its storage location is recorded in the work area in RAM14.

Step 2:

Then, the MPU 10 decodes a graphic display command in the program. In this case, since the graphic pattern is assumed to be a yellow circle, the command includes as its parameters an indication specifying a circle, the center of the circle, its diameter and color information specifying yellow.

Step 3:

The MPU 10 calculates locations of an arc to be displayed according to a predetermined algorithm bit by bit so as to map the circular graphic pattern in the APA buffers 22A - 22C in accordance with the result of decoding in Step 2.

Step 4:

As described, since the circle to be displayed is assumed to be in yellow, the MPU 10 writes the bit information indicating the arc calculated in Step 3 into predetermined storage locations of APA buffers 22B and 22C corresponding to G (green) and B (blue), respectively. Therefore, when this step is completed, a yellow circle as shown in Figure 4A (a) is displayed on the screen. And the APA buffers 22B and 22C are written with the bit information indicating the arc, respectively.

Step 5:

Then, the MPU 10 decodes a character display command in the program. In this case, since the character to be displayed first is assumed to be a green "A," the character display command includes as its parameters a character code identifying the character "A," color information specifying green, and address information specifying the character display location on the screen.

Step 6:

The MPU 10 determines a storage location of R1 memory 40 where the pattern of character "A" is stored by checking said work area in the RAM 14 according to the decoding in Step 5, reads address information indicating the storage location from said work area, and writes the address information into a storage location of R2 memory 42 which corresponds to the character display location specified by the character display command in Step 5. For example, assuming that the pattern of character "A" is stored in storage location #1 of R1 memory 40, and it is specified to display the character at character display location #50 on the screen, storage location #50 of R2 memory 42 receives the address information specifying storage location #1 of R1 memory 40.

Step 7:

Similar to Step 6, color information specified by the character display command is written into a storage location of R3 memory 44 which correspond to the character display location specified by the command. For example, if it is specified to display the green character "A" at character display location #50 on the screen, storage location #50 of R3 memory 44 is stored with color information specifying green. Figure 4A (b) shows the display on the screen and the contents of the memories R1 - R3 when steps 6 and 7 are completed.

Step 8:

The MPU 10 reads contents of storage locations of APA buffers 22A - 22C corresponding to the character display location for the character "A," and writes them into the work area of RAM 14. This operation is shown in Figure 4A (c).

Step 9:

The MPU 10 reads the pattern of character "A" from the R1 memory 40 by using the address information written into the R2 memory 42 in Step 6, and writes the pattern into the work area of RAM 14. In addition, since it is determined by reading the color information written into the R3 memory 44 in Step 7 that the character "A" is in green, the MPU performs an exclusive OR (XOR) operation of the pattern of character "A" read in this step and the graphic pattern read in Step 8 from the APA buffer 22B for G (green). In this case, the intersection of both patterns is erased because of the characteristic of XOR.

Step 10:

4

In this step, the MPU 10 writes the result of XOR operation in Step 9 into the original storage location of APA buffer 22B. When this step is completed, since the APA buffer 22B is stored with the pattern of character "A" and the pattern of arc corresponding to its character display location in an overlapped manner, the desired overlapped pattern as shown in Figure 4A (d) is displayed on the screen. However, since the original graphic patterns stored in the APA buffers 22A - 22C is selectively erased by color unit according to XOR operation with the character pattern, the intersections of both patterns displayed on the screen have the color listed in the following table.

Now, operation is described to display a blue character "B" instead of the above character "A" at the same location.

Step 11:

The MPU 10 decodes a character display command similar to that in Step 5. However, in this case, since the character to be displayed in second time is assumed to be "B" in blue, the character display command contains a character code identifying the character "B," color information specifying blue, and address information specifying the same character display location on the screen as that for the character "A" as its parameters.

5

| Color of character \ Color of graphic | Blue | Red | Magenta | Green | Cyan | Yellow | White |
|---|---|---|---|---|---|---|---|
| Blue | Black | Magenta | Red | Cyan | Green | White | Yellow |
| Red | Magenta | Black | Blue | Yellow | White | Green | Cyan |
| Magenta | Red | Blue | Black | White | Yellow | Cyan | Green |
| Green | Cyan | Yellow | White | Black | Blue | Red | Magenta |
| Cyan | Green | White | Yellow | Blue | Black | Magenta | Red |
| Yellow | White | Green | Cyan | Red | Magenta | Black | Blue |
| White | Yellow | Cyan | Green | Magenta | Red | Blue | Black |

Step 12:

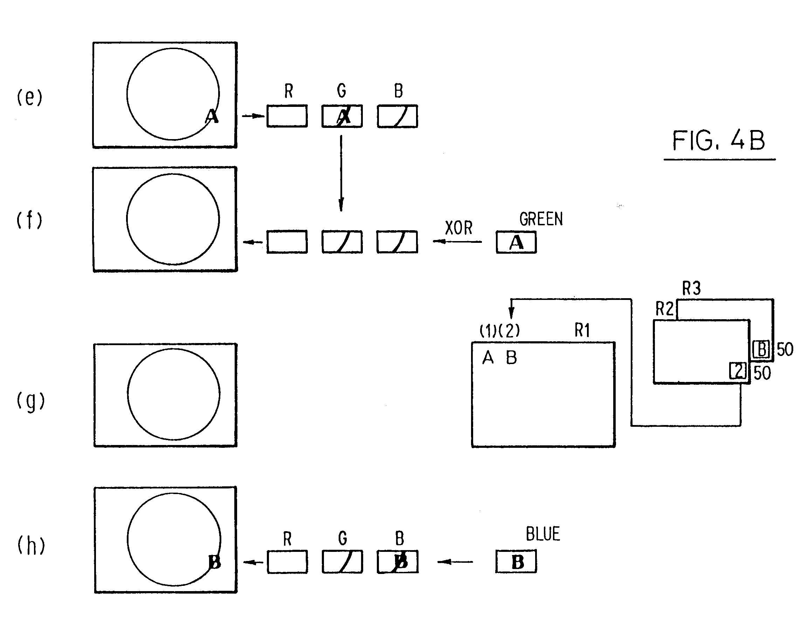

According to the result of decoding, the MPU 10 reads the contents of those storage locations of APA buffers 22A - 22C which correspond to the character display location for the character "B," and writes them into the work area of RAM 14. This operation is shown in Figure 4B (e).

6

Step 13:

The MPU 10 reads the current content of the storage location of R2 memory 42 (address information specifying the storage location of R1 memory 40 where the character "A" is stored) which correspond to the character display location specified by the address information in the character display command, reads current content of R1 memory 40 (the pattern of character "A") specified by the former content, and writes the latter content into the work area of RAM 14.

Step 14:

Then, the MPU 10 reads current content of the storage location of R3 memory 44 (the color information specifying that the character "A" is in green) which correspond to the character display location specified by the address information in the character display command, and, by using this, selects the specific content of APA buffers 22A - 22C read in Step 12, that is, the content of APA buffer 22B corresponding to G (green). Then, the MPU 10 performs an XOR operation between the content of APA buffer 22B and the pattern of character "A" read in Step 13, and writes the result of the XOR operation into the APA buffer 22B. Since the pattern of character "A" written into the APA buffer is erased by this XOR operation, the original circular graphic pattern is reproduced on the screen as shown in Figure 4B (f).

Step 15:

In this step, operations similar to Steps 6 and 7 are performed. That is, the address information, specifying the storage location of R1 memory 40 storing the pattern of character "B", is written into the storage location of R2 memory 42 which corresponds to the specified character display location. In addition, the color information of character "B" is written into the storage location of R3 memory 44 which correspond to the specified character display location. Figure 4B (g) shows the status of R1 - R3 memories in an assumed example where the character "B" is stored in storage location #2 of R1 memory 40, and the blue character "B" is to be displayed at character display location #50.

Step 16:

In this step, operation similar to Step 8 is performed. This causes the MPU 10 to read the contents of APA buffers 22A - 22C at their storage locations which correspond to the display location of character "B", and write them into the work area of RAM 14.

Step 17:

In this step, operation similar to Step 9 is performed. This causes the MPU 10 to perform an XOR operation of the pattern of character "B" read from the R1 memory 40 and the graphic pattern read from the APA buffer 22C.

Step 18:

In this step, operation similar to Step 10 is performed. This causes to display an overlapped pattern as shown in Figure 4B (h) on the screen.

Although, in the above description, the APA buffers 22A - 22C storing the graphic patterns are described as comprising three buffers corresponding to the primary colors, it is needless to say that they can be replaced with one APA buffer that stores in its each storage location one set of color specifying bits for each pixel, or an equivalent memory. In addition, it can be understood that the principle of the invention is suitable to a CRT color display, but is not limited thereto.

**Claims**

1. A colour display system for displaying characters constituted by arrays of mxn picture elements at predetermined character positions in a display area (38) addressable in all points addressable (APA) mode to display graphics information under the control of an APA buffer (22) having a storage position for each picture element in said display area (38), comprising:
a pattern memory (40) having a plurality of pattern locations, each of said pattern locations storing a

7

character pattern corresponding to a known character;

a pointer memory (42) having storage locations corresponding to each of said character positions, each of said storage locations storing address information of the pattern location which contains the character pattern corresponding to the character to be displayed at the related character position;

a colour information memory (44) having information locations corresponding to each of said character positions, each of said information locations containing colour information determining the colour of the character to be displayed at the related character position;

means (BUS) for interconnecting a processor (10) with said pattern memory (40), pointer memory (42), colour information memory (44), and said APA buffer (22);

graphics means in said processor (10) for producing said graphics information which associates a colour with each individual picture element in said display area (38), and storing said graphics information in the related storage positions of said APA buffer (22);

combining means in said processor (10) which, for a particular character position, logically combines said graphics information for the picture elements in said particular character position with the character pattern and colour information associated with said particular character position; and

means for sending the contents of the APA buffer (22) to said display area (38) for display.

2. A colour display system as claimed in Claim 1, wherein said APA buffer (22) is divided into three APA memories (22A, 22B, 22C), each APA memory having a storage position for each picture element in said display area but only storing graphics information for one predetermined colour.

3. A colour display system as claimed in Claim 2, wherein said three APA memories (22A, 22B, 22C) store graphics information for the colours red, green, and blue.

4. A colour display system as claimed in any preceding claim, wherein said combining means adapts said graphics information by XOR-ing the graphics information of picture elements in said particular character position with said particular character pattern.

5. A colour display system as claimed in any preceding claim, wherein said processor (10) loads character patterns into said pattern memory (40) during an initialization procedure, but only stores information in said pointer memory (42), colour information memory (44) and APA buffer (22) upon occurrence of a display command received from an operating program.

6. A colour display system as claimed in any preceding claim, wherein some or all of said pattern memory, pointer memory, colour information memory, and APA buffer are contained in a common physical store.

7. A method of displaying characters constituted by arrays of mxn picture elements at predetermined character positions in a display area (38) addressable in all points addressable (APA) mode to display graphics information under the control of an APA buffer (22) having a storage position for each picture element in said display area, including the steps of:

storing a character pattern corresponding to a known character in one of a plurality of pattern locations contained within a pattern memory (40);

storing address information in a pointer memory (42) having storage locations corresponding to each of said character positions, said address information giving the address of a pattern location that contains the character pattern corresponding to the character to be displayed at the related character position;

storing colour information in a colour information memory (44) having information locations corresponding to each of said character positions, said colour information determining the colour of the character to be displayed at the related character position;

producing said graphics information which associates a colour with each individual picture element in said display area, and storing said graphics information in the related storage positions of said APA buffer (22);

combining, for a particular character position, graphics information for the picture elements in said particular character position with the character pattern and colour information associated with said particular character position in order to produce a new set of graphics information; and

storing said new set of graphics information resulting from said combination step in said APA buffer (22) for sending to said display area for display.

**8.** A method as claimed in Claim 7 wherein said combining step comprises:

for said particular character position reading the address information from the corresponding storage location in said pointer memory (42);

using the address information to retrieve the desired character pattern from said pattern memory (40);

reading the colour information from the corresponding information location in said colour information memory (44);

retrieving from said APA buffer (22) graphics information for all picture elements contained within the particular character position;and

combining the character pattern and colour information with said graphics information to produce a new set of graphics information.

**9.** A method as claimed in Claim 7 or Claim 8 wherein, in order to substitute a character in said display area (38) with a new character, the following steps are performed:

reading the character pattern corresponding to the character to be replaced from said pattern memory (40);

XOR-ing said character pattern with the corresponding graphics information retrieved from said APA buffer (22) to produce a revised graphics information;

reading a new character pattern corresponding to said new character from said pattern memory (40);

XOR-ing said new character pattern with the revised graphics information to produce a new graphics information;

writing said new graphics information into said APA buffer (22) in the storage positions from which said graphics information was retrieved; and

displaying said graphics information in said display area (38).

## Revendications

**1.** Système d'affichage en couleur pour afficher des caractères constitués par des ensembles d'éléments d'image mxn à des positions de caractère prédéterminées dans une zone d'affichage (38) adressable dans un mode adressable en tous points (APA) pour afficher des informations graphiques sous le contrôle d'un dispositif tampon APA (22) ayant une position d'emmagasinage par élément d'image dans ladite zone d'affichage (38), comprenant:

une mémoire de configurations (40) ayant une pluralité d'emplacements de configuration, chacun desdits emplacements de configuration emmagasinant une configuration de caractère correspondant à un caractère connu;

une mémoire de pointeurs (42) ayant des emplacements d'emmagasinage correspondant à chacune desdites positions de caractère, chacun desdits emplacements d'emmagasinage emmagasinant l'information d'adresse de l'emplacement de configuration qui contient une configuration de caractère correspondant au caractère à afficher à la position de caractère associée;

une mémoire d'informations de couleur (44) ayant des emplacements d'information correspondant à chacune desdites positions de caractère, chacun desdits emplacements d'information contenant une information de couleur déterminant la couleur du caractère à afficher à la position de caractère associée;

des moyens (BUS) pour interconnecter un processeur (10) avec ladite mémoire de configurations (40), lesdites mémoire de configurations (40), mémoire de pointeurs (42), mémoire d'informations de couleur (44), et ledit dispositif tampon APA (22);

des moyens graphiques dans ledit processeur (10) pour produire lesdites informations graphiques qui associent une couleur à chaque élément d'image distinct dans ladite zone d'affichage (38), et emmagasiner lesdites informations graphiques dans les positions d'emmagasinage associées dudit dispositif tampon APA (22);

des moyens de combinaison dans ledit processeur (10) qui, pour une position de caractère particulière, combinent de façon logique lesdites informations graphiques des éléments d'image dans ladite position de caractère particulière avec les informations de configuration de caractère et de couleur associées à ladite position de caractère particulière; et

des moyens pour envoyer le contenu du dispositif tampon APA (22) à ladite zone d'affichage (38) en vue d'un affichage.

**2.** Système d'affichage en couleur selon la revendication 1, dans lequel ledit dispositif tampon APA (22) est divisé en trois mémoires APA (22A, 22B, 22C), chaque mémoire APA ayant une position d'emmagasinage par élément d'image dans ladite zone d'affichage mais emmagasinant seulement des informations graphiques pour une couleur prédéterminée.

3. Système d'affichage en couleur selon la revendication 2, dans lequel lesdites trois mémoires APA (22A, 22B, 22C) emmagasinent des informations graphiques pour les couleurs rouge, vert et bleu.

4. Système d'affichage en couleur selon l'une quelconque des revendications précédentes, dans lequel lesdits moyens de combinaison adaptent lesdites informations graphiques en soumettant à une condition OU exclusif les informations graphiques d'éléments d'image dans ladite position de caractère particulière avec ladite configuration de caractère particulière.

5. Système d'affichage en couleur selon l'une quelconque des revendications précédentes, dans lequel ledit processeur (10) charge des configurations de caractère dans ladite mémoire de configurations (40) durant une procédure d'initialisation, mais emmagasine seulement l'information dans lesdites mémoire de pointeurs (42), mémoire d'informations de couleur (44) et ledit dispositif tampon APA (22) lors de l'apparition d'une commande d'affichage reçue à partir d'un programme d'exploitation.

6. Système d'affichage en couleur selon l'une quelconque des revendications précédentes, dans lequel lesdites mémoire de configurations, mémoire de pointeurs, mémoire d'informations de couleur et ledit dispositif tampon APA sont totalement ou partiellement contenus dans une mémoire physique commune.

7. Procédé d'affichage de caractères constitués par mxn ensembles d'éléments d'image à des positions de caractère prédéterminées dans une zone d'affichage (38) adressable dans un mode adressable en tous points (APA) pour afficher des informations graphiques sous le contrôle d'un dispositif tampon APA (22) ayant une position d'emmagasinage par élément d'image dans ladite région d'affichage, comprenant les étapes de:
emmagasiner une configuration de caractère correspondant à un caractère connu dans un d'une pluralité d'emplacements de configuration contenus dans une mémoire de configurations (40);
emmagasiner l'information d'adresse dans une mémoire de pointeurs (42) ayant des emplacements d'emmagasinage correspondant à chacune desdites positions de caractère, ladite information d'adresse donnant l'adresse d'un emplacement de configuration qui contient la configuration de caractère correspondant au caractère à afficher à la position de caractère associée;
emmagasiner des informations de couleur dans une mémoire d'informations de couleur (44) ayant des emplacements d'informations correspondant à chacune desdites positions de caractère, lesdites informations de couleur déterminant la couleur du caractère à afficher à la position de caractère associée;
produire lesdites informations graphiques qui associent une couleur à chaque élément d'image distinct dans ladite zone d'affichage, et emmagasiner lesdites informations graphiques dans les positions d'emmagasinage associées dudit dispositif tampon APA (22);
combiner, pour une position de caractère particulière, les informations graphiques des éléments d'image dans ladite position de caractère particulière avec les informations de configuration de caractère et de couleur associées à ladite position de caractère particulière afin de produire un nouveau jeu d'informations graphiques; et
emmagasiner ledit nouveau jeu d'informations graphiques résultant de ladite étape de combinaison dans ledit dispositif tampon APA (22) pour l'envoyer à ladite zone d'affichage en vue d'un affichage.

8. Procédé selon la revendication 7, dans lequel ladite étape de combinaison comprend:
pour ladite position de caractère particulière, la lecture de l'information d'adresse dans l'emplacement d'emmagasinage correspondant dans ladite mémoire de pointeurs (42);
la lecture de l'information de couleur dans l'emplacement d'information correspondant dans ladite mémoire d'informations de couleur (44);
la récupération dans ledit dispositif tampon APA (22) des informations graphiques de tous les éléments d'image contenus dans la position de caractère particulière; et
la combinaison des informations de configuration de caractère et de couleur avec lesdites informations graphiques pour produire un nouveau jeu d'informations graphiques.

9. Procédé selon les revendications 7 ou 8, dans lequel, pour remplacer un caractère dans ladite zone d'affichage (38) par un nouveau caractère, sont accomplies les étapes suivantes:

lire la configuration de caractère correspondant au caractère à remplacer dans ladite mémoire de configurations (40);

soumettre à une condition OU exclusif ladite configuration de caractère avec les informations graphiques récupérées dans ledit dispositif tampon APA (22) pour produire des informations graphiques révisées;

lire une nouvelle configuration de caractère correspondant audit nouveau caractère dans ladite mémoire de configurations (40);

soumettre à une condition OU exclusif ladite nouvelle configuration de caractère avec les informations graphiques révisées pour produire de nouvelles informations graphiques;

écrire lesdites informations graphiques dans ledit dispositif tampon APA (22) dans les positions d'emmagasinage d'où ont été récupérées lesdites informations graphiques; et

afficher lesdites informations graphiques dans ladite zone d'affichage (38).

## Patentansprüche

1. Farbanzeigesystem zum Anzeigen von Zeichen, die von Anordnungen von m x n Bildelementen bei vorbestimmten Zeichenpositionen in einem Anzeigebereich (38) gebildet sind, der in einem punktadressierbaren (APA) Modus adressierbar ist, um Graphikinformationen unter der Steuerung von einem APA-Puffer (22) anzuzeigen, der eine Speicherposition für jedes Bildelement in dem Anzeigebereich (38) besitzt, das folgendes aufweist:

einen Musterspeicher (40) mit einer Mehrzahl von Musterstellen, wobei jede der Musterstellen ein Zeichenmuster speichert, das einem bekannten Zeichen entspricht,

einen Zeigerspeicher (42) mit Speicherstellen, die jeder der Zeichenpositionen entsprechen, wobei jede der Speicherstellen Adreßinformationen der Musterstelle speichert, welche das Zeichenmuster enthält, welches dem Zeichen entspricht, das bei der zugehörigen Zeichenposition angezeigt werden soll,

einen Speicher (44) für Farbinformationen mit Informationenstellen, die jeder der Zeichenpositionen entsprechen, wobei jede der Informationsstellen Farbinformationen enthält, welche die Farbe des Zeichens bestimmen, das bei der zugehörigen Zeichenposition angezeigt werden soll,

Mittel (BUS) zum Verbinden eines Prozessors (10) mit dem Musterspeicher (40), dem Zeigerspeicher (42), dem Speicher (44) für Farbinformationen und dem APA-Puffer (22),

Graphikmittel in dem Prozessor (10) zum Erzeugen der Graphikinformationen, die eine Farbe jedem einzelnen Bildelement in dem Anzeigebereich (38) zuordnen und zum Speichern der Graphikinformationen in den zugehörigen Speicherpositionen des APA-Puffers (22),

ein kombinierendes Mittel in dem Prozessor (10), das für eine spezielle Zeichenposition die Graphikinformationen für die Bildelemente in der speziellen Zeichenposition mit dem Zeichenmuster und den Farbinformationen logisch kombiniert, welche der speziellen Zeichenposition zugeordnet sind und

Mittel zum Senden des Inhalts des APA-Puffers (22) an den Anzeigebereich (38) für eine Anzeige.

2. Farbanzeigesystem nach Anspruch 1, bei welchem der APA-Puffer (22) in drei APA-Speicher (22A, 22B, 22C) geteilt ist, wobei jeder APA-Speicher eine Speicherposition für jedes Bildelement in dem Anzeigebereich aufweist, jedoch nur Graphikinformationen für eine vorbestimmte Farbe speichert.

3. Farbanzeigesystem nach Anspruch 2, bei welchem die drei APA-Speicher (22A, 22B, 22C) Graphikinformationen für die Farben rot, grün und blau speichern.

4. Farbanzeigesystem nach irgendeinem vorgehenden Anspruch, bei welchem das kombinierende Mittel die Graphikinformationen durch XOR-Bildung aus den Graphikinformationen der Bildelemente in der speziellen Zeichenposition mit dem speziellen Zeichenmuster anpaßt.

5. Farbanzeigesystem nach irgendeinem vorgehenden Anspruch, bei welchem der Prozessor (10) während eines Initialisierungsablaufs Zeichenmuster in den Musterspeicher (40) ladet, Informationen in dem Zeigerspeicher (42), dem Speicher (44) für Farbinformationen und dem APA-Puffer (22) jedoch nur nach dem Vorkommen eines Anzeigebefehls speichert, der aus einem Bedienungsprogramm empfangen wird.

6. Farbanzeigesystem nach irgendeinem vorgehenden Anspruch, bei welchem einige oder jeder der Musterspeicher, Zeigerspeicher, Speicher für Farbinformationen und APA-Puffer in einem gemeinsamen physischen Speicher enthalten sind.

7. Verfahren zum Anzeigen von Zeichen, die von Anordnungen von m x n Bildelementen bei vorbestimmten Zeichenpositionen in einem Anzeigebereich (38) gebildet sind, der in einem punktadressierbaren (APA) Modus adressierbar ist, um Graphikinformationen unter der Steuerung von einem APA-Puffer (22) anzuzeigen, der eine Speicherposition für jedes Bildelement in dem Anzeigebereich besitzt, welches die folgenden Schritte aufweist:

Speichern eines Zeichenmusters, das einem bekannten Zeichen in einer aus einer Mehrzahl von Musterstellen entspricht, die innerhalb eines Musterspeichers (40) enthalten sind,

Speichern von Adreßinformationen in einem Zeigerspeicher (42), mit Speicherstellen, die jeder der Zeichenpositionen entsprechen, wobei die Adreßinformationen die Adresse einer Musterstelle liefern, welche das Zeichenmuster enthält, welches dem Zeichen entspricht, das bei der zugehörigen Zeichenposition angezeigt werden soll,

Speichern von Farbinformationen in einem Speicher (44) für Farbinformationen mit Informationenstellen, die jeder der Zeichenpositionen entsprechen, wobei die Farbinformationen die Farbe des Zeichens bestimmen, das bei der zugehörigen Zeichenposition angezeigt werden soll,

Erzeugen der Graphikinformationen, die eine Farbe jedem einzelnen Bildelement in dem Anzeigebereich zuordnen und Speichern der Graphikinformationen in den zugehörigen Speicherpositionen des APA-Puffers (22),

für eine spezielle Zeichenposition, Kombinieren von Graphikinformationen für die Bildelemente in der speziellen Zeichenposition mit dem Zeichenmuster und den Farbinformationen, welche der speziellen Zeichenposition zugeordnet sind, um einen neuen Satz von Graphikinformationen zu erzeugen und

Speichern des neuen Satzes von Graphikinformationen, der sich aus dem Schritt des Kombinierens in dem APA-Puffer (22) ergibt, um an den Anzeigebereich für eine Anzeige zu senden.

8. Verfahren nach Anspruch 7, bei welchem der Schritt des Kombinierens folgendes umfaßt:

für die spezielle Zeichenposition Lesen der Adreßinformationen aus der entsprechenden Speicherstelle in dem Zeigerspeicher (42),

Verwenden der Adreßinformationen, um das gewünschte Zeichenmuster aus dem Musterspeicher (40) zurückzuholen,

Lesen der Farbinformationen aus der entsprechenden Informationsstelle in dem Speicher (44) für Farbinformationen,

Zurückholen von Graphikinformationen für alle Bildelemente aus dem APA-Puffer (22), die innerhalb der speziellen Zeichenposition enthalten sind und

Kombinieren des Zeichenmusters und der Farbinformationen mit den Graphikinformationen, um einen neuen Satz von Graphikinformationen zu erzeugen.

9. Verfahren nach Anspruch 7 oder Anspruch 8, bei welchem die folgenden Schritte durchgeführt werden um ein Zeichen in dem Anzeigebereich (38) durch ein neues Zeichen zu ersetzen:

Lesen des Zeichenmusters, welches dem Zeichen entspricht, das in dem Musterspeicher (40) ersetzt werden soll,

XOR-Bilden aus dem Zeichenmuster mit den entsprechenden Graphikinformationen, die aus dem APA-Puffer (22) zurückgeholt sind, um überarbeitete Graphikinformationen zu erzeugen,

Lesen eines neuen Zeichenmusters, welches dem neuen Zeichen aus dem Musterspeicher (40) entspricht,

XOR-Bilden aus dem neuen Zeichenmuster mit den überarbeiteten Graphikinformationen, um neue Graphikinformationen zu erzeugen,

Schreiben der neuen Graphikinformationen in den APA-Puffer (22) in den Speicherpositionen, aus welchen die Graphikinformationen zurückgeholt wurden und

Anzeigen der Graphikinformationen in dem Anzeigebereich (38).

EMBODIMENT

FIG. 1

PRIOR ART
FIG. 2

START

WRITE CHARACTER PATTERNS FROM DISKETTE INTO R1 MEMORY — 1

DECODE A GRAPHIC DISPLAY COMMAND — 2

CALCULATE BIT INFORMATION OF A CIRCLE — 3

WRITE THE CALCULATED BIT INFORMATION INTO APAs — 4

DECODE A CHARACTER DISPLAY COMMAND — 5

WRITE R1 MEMORY ADDRESS OF PATTERN "A" INTO R2 MEMORY — 6

3A TO FIG. 3B

FIG. 3A

15

3A FROM FIG. 3A

WRITE COLOR INFORMATION OF
"A" INTO R3 MEMORY                    ⟳ 7

READ GRAPHIC PATTERNS FROM
APAs                                   ⟳ 8

XOR PATTERN "A" WITH
CONTENT OF APA(G)                     ⟳ 9

WRITE THE XORed PATTERN
INTO APA(G)                           ⟳ 10

DECODE A CHARACTER
DISPLAY COMMAND                       ⟳ 11

READ GRAPHIC PATTERNS
FROM APAs                             ⟳ 12

READ PATTERN "A"
FROM R1 MEMORY                        ⟳ 13

FIG. 3B

3B TO FIG. 3C

3B  FROM FIG. 3B

XOR PATTERN "A" WITH
CONTENT OF APA (G) — 14

WRITE R1 MEMORY ADDRESS
OF PATTERN "B" INTO R2 MEM
-ORY.  WRITE COLOR INFORMATI
-ON OF "B" INTO R3  MEMORY — 15

READ GRAPHIC PATTERNS
FROM APAs — 16

XOR PATTERN "B" WITH
CONTENT OF APA (B) — 17

WRITE THE XORed PATTERN
INTO APA(B) — 18

END

FIG. 3C

FIG. 4A

FIG. 4B

(e)

(f)

(g)

(h)

R   G   B

XOR   GREEN
A

(1)(2)   R1
A  B

R3
R2
B  50
2  50

BLUE
B

EP 0 189 567 B1

19